# EUROPEAN PATENT SPECIFICATION

(11) **EP 0 443 212 B1**
(45) Date of publication and mention of the grant of the patent: **11.06.1997**
(21) Application number: 90200420.9
(22) Date of filing: 22.02.1990
(51) Int. Cl.: G06F 9/44, G06F 17/30, G06F 11/22

(54) **A method for executing computer-assisted physical fault diagnosis by means of an expert system**
Verfahren zur Durchführung einer rechnergestützten Diagnose von physikalischen Fehlern mittels eines Expertsystems
Méthode pour mettre en oeuvre un diagnostic assisté par ordinateur de défauts physiques au moyen d'un système expert

(43) Date of publication of application: 28.08.1991
(73) Proprietor: Philips Electronics N.V., 5621 BA Eindhoven (NL)
(72) Inventor: Thomason, Graham Gordon, NL-5656 AA Eindhoven (NL)
(74) Representative: Strijland, Wilfred

(56) References cited:
- EP-A- 0 334 113
- US-A- 4 649 515
- US-A- 4 866 635
- IEEE COMMUNICATIONS MAGAZINE, vol. 26, no. 3, March 1988, pages 6-13, New York, US; T.E. MARQUES: "A symptom-driven expert system for isolating and correcting network faults"
- COMPUTER, vol. 19, no. 7, July 1986, pages 68-76, New York, US; F. PIPITONE: "The FIS electronics troubleshooting system"
- PROC. FIRST CONF. ON ARTIFICIAL INTELLIGENCE APPLICATION, 1984, pages 133-138; F. PIPITONE: "An expert system for electronics troubleshooting based on function and connectivitiy"
- THE COMPUTER JOURNAL, vol. 28, no. 4, August 1985, pages 366-371, London, GB; M. SCHNEIDER: "Weighted decision tables - an alternative solution for ambiguity"

## Description

The invention relates to a method for physical fault diagnosing of an object by a computer-based expert system, using a first set of physical fault symptoms each linked to at least one element of a second set of fault syndromes each linked to at least one element of a third set of fault cause hypotheses, by collecting a non-empty subset of said first set and appropriate symptom attributes to any element collected. The fault diagnosing expert system is constructed by making use of a so-called expert system shell or set of building rules that is domain-specific in that it has been designed in particular with a view to physical fault diagnostic systems. In particular, such a shell incorporates a particular reasoning strategy as based on forward and backward chaining combined, within the knowledge base of the system, prioritization and cancellation of hypotheses, a three or more tiered categorizing of fault related concepts (symptoms/attributes, syndromes, and hypotheses or fault causes), and a particularly flexible interconnectability. The shell also allows to cope with incomplete or -don't-know- information about the physical object. In particular also, the shell has many advantageous user interface aspects, inter alia by allowing for both menu selectability used in situations where the expert system has no directed questions to ask and, in the opposite case also allowing direct questions for symptoms and/or attributes. In general the expert system combines a shell with an appropriate set of rules.

Now, such an expert system is commonly built by first acquiring general knowledge to such extent only as is necessary to study the domain, i.e. physical fault diagnosis. Next, in the acquired knowledge, different element classes of knowledge are identified and different reasoning and processing paradigms that are associated with the various classes of knowledge. Next, the acquired knowledge is structured according to the knowledge model. Next, the expert system shell is established as a suitable representation for the structured knowledge. The existing knowledge is then programmed in the chosen representation. Next, the functionality is extended and validation takes place incrementally as new knowledge is added. Now, in contrast to the above, the present invention greatly facilitates the above-mentioned process of constructing an expert system in all the above steps. In particular, the knowledge modelling and representation activities are minimal because a predefined model and representation are made available. In the representation of the expert system knowledge proper, various advantageous aspects are as follows:
- use is allowed of domain-specific terminology and keywords;
- knowledge is categorized into various knowledge-classes;
- the reasoning strategy is implicitly located in the shell and need not be provided explicitly in the knowledge base itself;
- the syntax of the knowledge base as entered is not constrained by any implementation language properties.

US Patent 4,866,635 by Kahn et al, in particular col. 7, 1. 36 to col. 10, 1. 64, and col. 33, 1. 47 to col. 36, 1. 68 and Figures 2 and 3 (D1), discloses a domain-independent shell for building a diagnostic expert system. Although Dl has various aspects in common with the present invention, various material differences lend the two solutions respective different characters.

### SUMMARY OF THE INVENTION

Among other things, it is an object of the present invention to provide a method for executing physical fault diagnosis as based on an expert system shell that allows for systematic diagnosis, easy adaptation to the gaining of insight in the nature and causes of such physical fault, optimum selection among probable causes thereof, and straightforwardly advising on remedies if accessible.

According to one of its aspects, the invention is characterized in that
- propagating from such collected physical fault symptoms that are basically complaints, and symptom attributes, that are facts associated with symptoms, through any appropriate link to a physical fault syndrome, that is a general sort of conclusion to be drawn from the symptoms and symptom attributes, of said second set and therefrom through any appropriate further link to a fault cause hypothesis, that is a theory which can account for symptoms and syndromes, of said third set, that were commensurate with at least one physical fault symptom selected;
- provisionally selecting a preferential fault cause hypothesis among those so reached by said propagating;
- soliciting any uncollected yet available physical fault symptom or symptom attribute information relevant to the provisionally selected preferential hypothesis;
- definitively selecting a definitive fault cause hypothesis which could account for at least a part of all physical fault symptoms and symptom attributes so collected whilst provisionally retaining any secondary fault cause hypothesis among those so reached and selectively verifying/refuting said definitive fault cause hypothesis and in case of said definitive fault cause hypothesis being refuted, reverting to said provisionally selecting, soliciting and definitively selecting, until either any definitive fault cause hypothesis is verified for thereupon issuing an operational advice for said collected physical fault symptoms, or alternatively, after repeating said steps of provisionally selecting, soliciting, and definitively selecting steps, all fault cause hypotheses that could account for said physical fault symptoms are exhausted.

Particular distinguishing features of the present invention are:

Its key concepts are symptoms, symptom attributes, syndromes, hypotheses, hypothesis proof trees, and probabilistic links. It can be considered as being centred around hypotheses, but can also be regarded primarily as a four-column model linking symptoms, syndromes, hypotheses and hypothesis proof trees. It starts with breadth-first scanning of the problem and then hypothesizes. It uses observable problems or symptoms as a concept of their own. It is predominantly probabilistic, but it can reason, using bidirectional links containing information on the consequences of both the presence and the absence of particular premises. It interprets domain-specific knowledge representation by means of the inference engine. It continuously maintains hypothesis probabilities during symptom acquisition, and refocusses its attention at hypothesis selection time, which can be either after symptom entry or after a hypothesis has been refuted. All of these aspects diverge from reference D1.

The interconnections between the elements of the first, second, and third sets have been straightforwardly defined, the system and any procedural level may take the next step along those links that can be forecasted as giving the greatest possible expected result and, furthermore, the method is perfectly sequential, in that it may be described as a single process: no parallel processes would be required. The links between the sets are one-directional, and all links have their directions from a lower-numbered set to a higher-numbered set. This means that no infinite loop can occur through following the link-directions, or, alternatively, continuously transversing them opposite to the link directions. So, the process is guaranteed to take only a finite time to complete. In general, the selecting of the hypotheses is done by first taking provisional hypotheses, therefrom selecting a preferential hypothesis, both backwardly collecting symptoms and attributes and therefrom forwardly selecting additional hypotheses, which may either verify or refute the definitive hypothesis. In case of refutation a new definitive hypothesis may be followed, whereby the old one may either be stricken from the set of hypotheses selected, or, alternatively, may still be retained. Ultimately, however, either one or zero fault cause hypothesis remains.

Advantageously, the collecting of physical fault symptoms and associated symptom attribute information is exclusively based on menuing on a physical display unit, whereas after selecting any preferential fault cause hypothesis only physical fault symptoms linked to the latest selected preferential fault cause hypothesis are interrogated.
This is one measure to speed up the whole diagnosis procedure by limiting the number of unuseful questions posed by the system.

Advantageously, said propagating is exclusively in a forward direction under activation of information input external to the system, said selecting is effected thru procedural computation, whereas collecting said symptom attribute information, said solliciting and said verifying include moving in a backward direction under activation by the system, while thereupon allowing secondary forward propagating through said linking.
The processing of symptoms collected is now effected instantaneously upon their reception, whereas all other necessary information is found by backchaining to require an operator to answer only the bares minimum of questions, for so further speeding up the process.

Advantageously, the propagation of physical fault symptoms and symptom attribute information through physical fault syndromes to physical fault hypothesis is performed on the basis of Bayesian probability theory.
This further speeds up the method in that the most probable candidates are selected first. In fact, each physical fault syndrome and each physical fault hypothesis has a prior probability which is adjusted in the light of and according to the physical fault symptoms and symptom attribute information known to be present or absent.

Advantageously, selection of a preferential hypothesis quantitatively prefers those hypotheses with a higher probability related to the verification thereof and quantitatively discriminates against those hypotheses with a higher expected verification cost. This further speeds up and simplifies the use of the inventive method.

Advantageously, items are categorized as -constants-; -physical fault symptoms-, grouped into -physical fault symptom groups-, -symptom attributes-, -physical fault syndromes-, -physical fault hypotheses-, and -rules-, and are directly represented by this domain-specific terminology for knowledge classes. Any element may thus be represented by its categorizing name that works as keyword or template. It would not be necessary to construct such keyword from higher level software. In particular, the examples given hereinafter need not be detailed to the level of such higher-level language, such as Prolog or Pascal.

Advantageously, elements of said knowledge classes and their mutual linkage are elaborated as at least co-controlled by their prescribed properties being strong taking preponderance over those being weak, by their being characteristic taking preponderance over those being non-characteristic, by their being sufficient or necessary taking preponderance over those being ancillary or arbitrary, and by those having a low cost of validation taking preponderance over those having a high cost of validation. Preponderance may imply the preference in the sequence of elaboration, in that strong elements of knowledge classes are elaborated first, while weaker ones are elaborated later, and likewise for the other properties. Other preponderances may imply the application of a weight factor, for example to a particular attribute, so that mutually contradicting attributes could cancel or have one of them prevail through a higher weight factor. Still other preponderance may imply the precluding of further elaboration, for example in that a particular symptom or attribute being present would directly lead to verification, in case such symptom or attribute would be both necessary and sufficient to such verification.

Advantageouly, any diagnostic reasoning strategy is implicit in an expert shell as being distinct from explicit in, or interwoven with any diagnostic knowledge items itself. Such diagnostic reasoning implicitness causes the automatic propagation between symptoms, syndromes and fault cause hypotheses as described herein, and it facilitates the setting up of the diagnostic knowledge itself.

Advantageously, said method comprises in addition to said preferential hypothesis, also a secondary or subsequent hypothesis, and by means of requesting any appropriate further physical fault symptom either affirming said preferential hypothesis in case of an affirming physical fault symptom or, alternatively, demoting in rank said preferential hypothesis is in case of a deaffirming physical fault symptom, in disfavour or favour, respectively, of any said secondary or subsequent hypothesis, respectively, for allowing in the latter case said secondary or subsequent hypothesis to thereafter figure as definitive preferential hypothesis but in the former retaining the actual preferential as definitive preferential hypothesis. Thus, while selecting a "best guess" hypothesis, also a second or third one, etc. may be kept in view, and by asking for appropriate physical fault symptoms and their associated attributes, the actual ranking among the selected hypotheses may be changed or maintained. After such changing, even a further changing may be effected, so that demoting need not be definitively discarding.

Advantageously, at least one physical fault symptom is produced on the basis of at least one physical signal directly derived from said object. Although operator interaction in case of a complicated structure of fault symptoms, fault syndromes and fault cause hypothesis is generally indispensible, the direct input of a measured quantity, such as an electric current or voltage, a humidity, temperature, or other may greatly accelerate the method and/or improve its accuracy.

Advantageously, said operation advice is any of a curing, cleaning, readjusting, object replacement, object removal, or repair recipe. If the object is faulty, it may be cured, so that the symptom vanishes or terminates. Sometimes, a cleaning operation would be remedial. In various cases, readjusting a parameter would finish the problem. Alternatively, replacement of a part or subsystem, or removal of a foreign object would give positive results. Repair also may be a solution. Of course, sometimes an emergency measure may be required, such as evacuation, or, for a smaller object, a straight reject. Finally in case of exhaustion of the possibly fault cause hypotheses, recourse may be had to a higher level solving system, or the reject may be executed.

Further advantageous aspects are recited in further dependent Claims.

### BRIEF DESCRIPTION OF THE FIGURES

The invention will be explained in detail with respect to a preferred embodiment as shown in the appended Figures, wherein:
Figure 1 shows a physical fault diagnosing system and its environment;
Figure 2 is a block diagram of a diagnostic model;
Figure 3 is a block diagram of a simplified diagnostic model;
Figure 4 is a flow chart of a basic reasoning strategy;

Tables 1... exemplify a particular fault diagnosis system or method.

### DESCRIPTION OF A PREFERRED EMBODIMENT

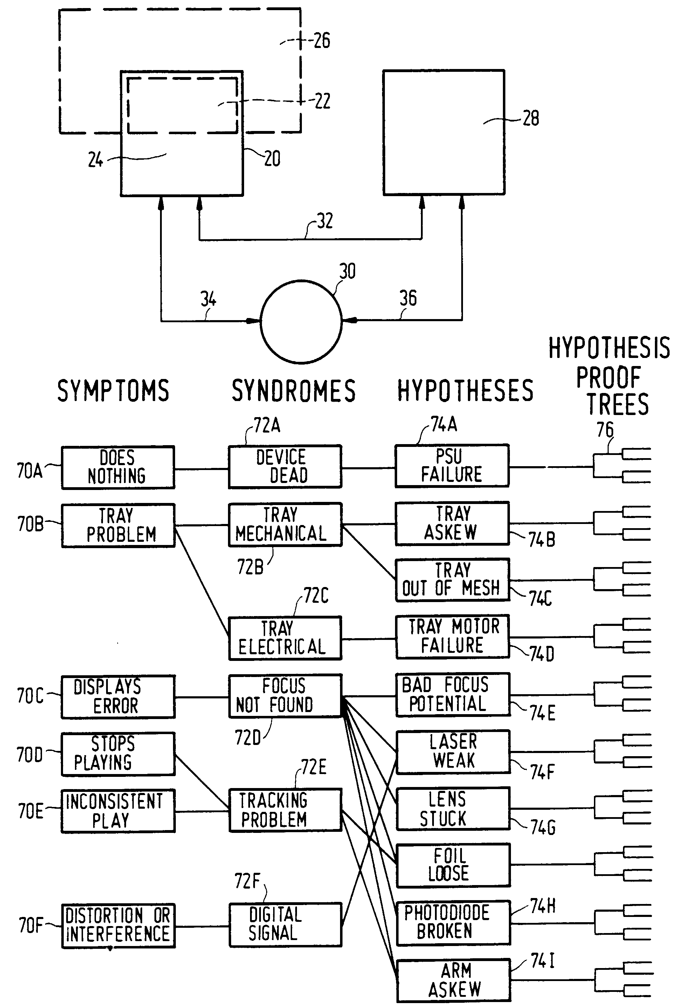

Figure 1 shows a physical fault diagnosing system and its physical and organizational environment. Block 28 symbolises an object device that may exhibit a physical fault. The object, by way of example, could be a data processing apparatus, a consumer entertainment product such as a compact disk player, a household appliance, a manufacturing machine or system, or another manufactured device that should fulfill a prespecified, physically definable function. Block 20 symbolises a physical fault diagnosing device, which comprises a computer and various associated peripherals for data storage, data display, data input and data communication, as suitable for the application. Interconnection 32 may derive from the object sensing signals, data quantities and other physical or electrical information, for use in the fault diagnosis. In the opposite direction, line 32 may carry stimuli signals, commands, test patterns and other information, suitable for use in eliciting a particular behaviour in object 28. The diagnosing device 20 comprises the diagnosing system proper 22 or expert system which has the task for on the basis of specific physical behaviour of object 28 therein pinpointing a particular physical fault cause or origin. Notably, the invention does not relate to such straightforward testing of the object which may only produce a good/fault indication thereof. In the context of the present invention, either a repair action could be suggested, or a specific updating of manufacturing process parameters or other remedial action as appropriate. In addition to the fault diagnosis system, device 20 comprises other elements, symbolised as half-block 24, such as the operating system, and other associated peripherals as listed supra. Wholly or partially in lieu of interconnection 32, an operator as symbolised by circle 30 may interact with diagnosing device 20 as symbolised by line 34 in that questions on a display may be read, audio commands may be followed, and manual or other computer input generated. Also the operator may interact with object 28 by way of effecting controls, reading physical indicators or assessing a particular quantitative or qualitative behaviour. The diagnosing system 22, in broken trace, has been formed by means of and as governed by a knowledge base in an expert system shell 26 that have been shown in broken lines.

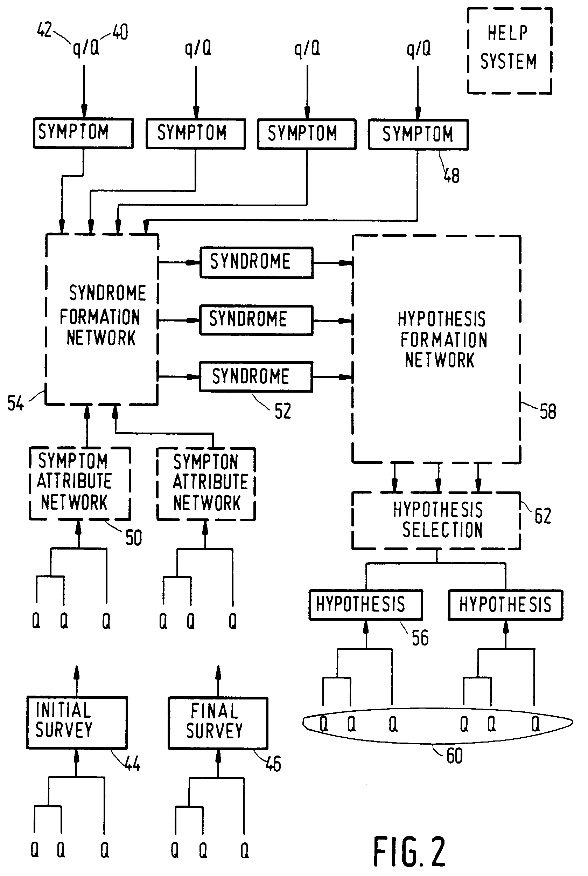

Figure 2 is a block diagram of a diagnostic model. The model has the following concept classes to be explained more in detail hereinafter:
* Question classes : Q (a directed question), q (non-directed input).
* Knowledge classes : INITIAL SURVEY, SYMPTOM, SYMPTOM ATRRIBUTE, SYNDROME, HYPOTHESIS, FINAL SURVEY.
* Networks including formation networks. These contain implicitly TREES as subcomponents. TREES in turn implicitly contain RULES, which are basic building blocks.
* A procedural aspect : The HYPOTHESIS SELECTION procedure.
* The HELP System.

At the edges of the model, the letters Q (40) (a directed question) and q (42) (non-directed input) are used. These are ways by which facts can enter the fact base. The system determines when which facts are required or allowed. A directed question is one which is specifically asked because the system needs an answer at that particular moment in time. Non-directed input indicates that the user has the opportunity of volunteering a piece of information, without any specific requirement for that item at the time, although the information entered will help steering the system in the most profitable direction for solving the diagnostic task. This information takes the form of a menu on a physical display device offering the user a choice of facts to select and enter. The answers to questions can be standard yes/no, general text, integral, real, or probabilities.

Although the term "question" is used, the fact which is obtained does not necessarily have to come from the user at a terminal. For a particular application it may accessed from an external database or from sensors and digital input ports, directly connected to the object under scrutiny.

### KNOWLEDGE CLASSES

The INITIAL SURVEY 44 is a collection of facts which are considered relevant right at the start of a diagnostic exercise, before the diagnosis begins. These facts might include the model and serial number of the device to be repaired, as this can have a bearing on how to diagnose it later on. Also for practical or accounting purposes, various facts about the repair centre and the repairer's equipment may belong to the initial survey. These facts are specifically asked for from the user, or specifically accessed from an external database, as is indicated by the question class for directed questions, Q. The technique employed is to backward chain one or more top level goals. For simplicty, no connection to other blocks has been shown.

Backward chaining consists of attempting to derive some unknown fact (a goal) by applying rules which conclude the goal from other facts. If these other facts are also unknown, but potentially deriveable, the process continues recursively. Ultimately a backward chainer will come across facts which can be ascertained from the user (or a database, or sensor, etcetera) and it will promptly make use of this facility, and then unwind the recursion up to the top level goal.

Forward chaining derives new facts, usually as many as can be derived, from existing facts, but without any specific goal, and so without consulting the user. For minimizing the total amount of time necessary for the diagnosis, the inputting of physical fault symptoms by a human operator (or, for that matter, from an autonomous sensor system) has been designed to largely avoid the asking of irrelevant questions. Before the system has formed any preferential hypothesis, physical fault symptoms are not individually asked for; they must be entered on initiative of the operator, in particular by presenting an appropriate menued selection of the symptoms. Once a provisionally preferential fault cause hypothesis has been selected, only relevant physical fault symptoms will be asked by means of direct questioning. During verification of a definitively selected preferential fault cause hypothesis, only questions relevant to the verification will be asked.

The FINAL SURVEY 46 is a similar fact-gathering exercise to the INITIAL SURVEY at the end of a consultation, which may involve asking the user if he is satisfied with the advice of the system.

SYMPTOMS 48 are basically complaints. The operator is dissatisfied with the equipment because it behaves differently to the specifications or differently to what was expected. The complaint is usually some immediately observable malfunction, for example a compact disc player which fails to play a compact disc. SYMPTOMS are not a theory as to where the fault actually is, let alone an attempt to explain what is wrong. For effectiveness, symptom information is acquired as non-directed input in the form of menus. The user can in this way describe the problem without answering irrelevant questions. A menu can contain up to about 20 entries, of which the user may select zero or more. The menu can be structured, e.g. a whole menu may be suppressed, depending on what is already known from the INITIAL SURVEY and symptoms already entered.

The capital letter Q indicates that SYMPTOMS can also be specifically asked for; this can occur later on in a diagnostic session, and is described further on.

SYMPTOM ATTRIBUTES are facts which are associated with SYMPTOMS. They are asked as directed questions at the moment they are relevant. They often correspond to an extra, careful observation that can be made when a SYMPTOM has been established. For example, if a hi-fi stereo amplifier has the symptom "distortion", it may be relevant to listen carefully to establish whether the distortion is on both channels or just on one. This would be a SYMPTOM ATTRIBUTE. A more detailed description of the distortion might be another. SYMPTOM ATTRIBUTES pop up, as it were, on their own initiative during some other basic activity (here, symptom gathering), and are produced by symptom attribute network 50. SYNDROMES 52 are a general sort of conclusion that can be drawn from the SYMPTOMS and SYMPTOM ATTRIBUTES (and possibly the INITIAL SURVEY), as generated by block 54. Syndromes are expert conclusions based on the symptoms as to what is basically malfunctioning, without attempting to explain the cause based on the symptoms. As an example, consider the compact disk. There are certain SYMPTOMS such as -not accepting a CD and showing error on the display-, which suggest a SYNDROME of "focus not found". The ordinary customer does not know about the optics of the CD player and so will not normally describe his complaint in terms of "focus not found". SYNDROMES are formed by a forward chaining technique using Bayesian logic to cope with uncertainties. Bayesian logic by itself is well-known, it means that the probability for realizing a particular event in future may be modified when the event has taken place under influence of some parameter value relating to the event. Thus, future probability and past probability need not be the same.

HYPOTHESES 56 are theories which can account for SYMPTOMS and SYNDROMES; they are first formed in network 58. Usually, a hypothesis implies suspecting a component or subassembly. The hypothesis can be tested by detailed observation and measurement. The result of testing a HYPOTHESIS may be that all suspected components do in fact work properly, which implies that the HYPOTHESIS was not correct in accounting for the failure of the device. Alternatively, testing the HYPOTHESIS may localize a defective component. An advised repair action can be linked to the hypothesis in that case. The system examines hypotheses by backward chaining on a single goal, which can be regarded as the top of a tree. The tree includes all tests (often in AND or OR combinations) and draws a conclusion as to whether the HYPOTHESIS has been successful.

It is important to notice the two facets of a HYPOTHESIS. One facet is the likelihood that the hypothesis will help solve the diagnostic question. This facet is a value based on what is usually imperfect evidence (e.g. from the class SYMPTOM). It is internally regarded as a probability. The other facet is the goal to be proved or disproved once the hypothesis is actually tested. This second facet usually involves hard-and-fast data resulting from measurements.

NETWORKS (50, 54, 58) are a set of facts, interlinked at nodes. (Many of the used statements are in fact nodes). A node can either be interpreted in the context of the forward chainer or a backward chainer.

Trees are special kinds of networks, in that they have one item at the top which can be derived from facts at a level below it. In the diagram of the diagnostic model, arbitrarily-sized trees are symbolically indicated by a small tree consisting of two nodes and three leaves. In practice trees may be more complex and may also deviate from the strict concept of a tree in that nodes may have more than one parent. This feature opens up the danger of circular reasoning, and should be used with caution. Trees may freely use any data in the knowledge base.

Rules are the definitions of the nodes in a tree or network. These may be the statements RULE, SYMPTOM, SYMPTOM ATTRIBUTE, SYNDROME, or HYPOTHESIS. Sometimes it is the precondition on a rule which links it into the network, or it may be the fact that the statement combines facts in an expression, or both. Statements which simply define a fact in some directly accessible way (such as a QUESTION) are leaves of the network. SYMPTOMS are often, but not necessarily, leaves of the network.

The HYPOTHESIS SELECTION 62 procedure takes account of both probability and cost; this gives the "expected effectiveness" of the HYPOTHESIS. The probability is the first facet of the HYPOTHESIS described above. The cost is to be interpreted in terms of the time and difficulty involved in examining a hypothesis. At the end of symptom collection, the hypothesis with the highest expected effectiveness becomes provisionally selected. Then the evidence for it is reviewed. Are there any missing items of evidence, in particular SYMPTOMS which were skipped over during their acquisition from menus? If so, directed questions will be asked about all such SYMPTOMS pertaining to the provisionally selected HYPOTHESIS. After this, the hypotheses are reevaluated for expected effectiveness. Often the same hypothesis will still be the best to choose. In that case it is definitively selected and its goal, (the second facet), is initiated. But it may be that another hypothesis overtakes the original hypothesis, or that the original hypothesis actually decreases in expected effectiveness as a result of evidence being acquired which is negative for that hypothesis. The original provisionally selected hypothesis may either be suspended or demoted in rank until later, or even excluded from further consideration. When a second hypothesis is chosen, the process of asking about skipped symptoms relevant to it, and re-evaluating the hypotheses, is repeated. In theory this process may take place on a third and subsequent hypotheses, but it is guaranteed to be finite.

The system provides two priority classes for hypotheses: URGENT and NORMAL. All URGENT hypotheses which are eligible will be dealt with before any NORMAL hypothesis is considered. Within a priority class the hypotheses are selected as described above. An example application of the URGENT class in factory plant diagnostics is to ensure immediate investigation of any dangerous situations for which there is even just slight evidence.

The system attempts to find just one successful HYPOTHESIS. If this is achieved, and the associated repair or other operational advice given, the FINAL SURVEY 46 is executed. If there are more faults, the system should be restarted as many previous symptoms may have disappeared. In some cases there may be no satisfactory hypothesis; in this case a graceful admission of defeat is made.

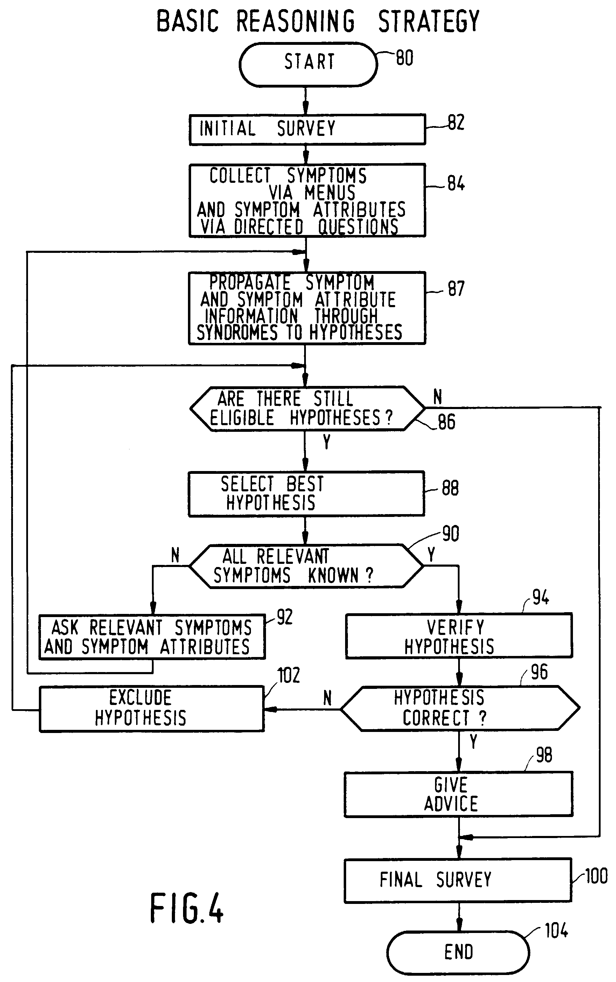

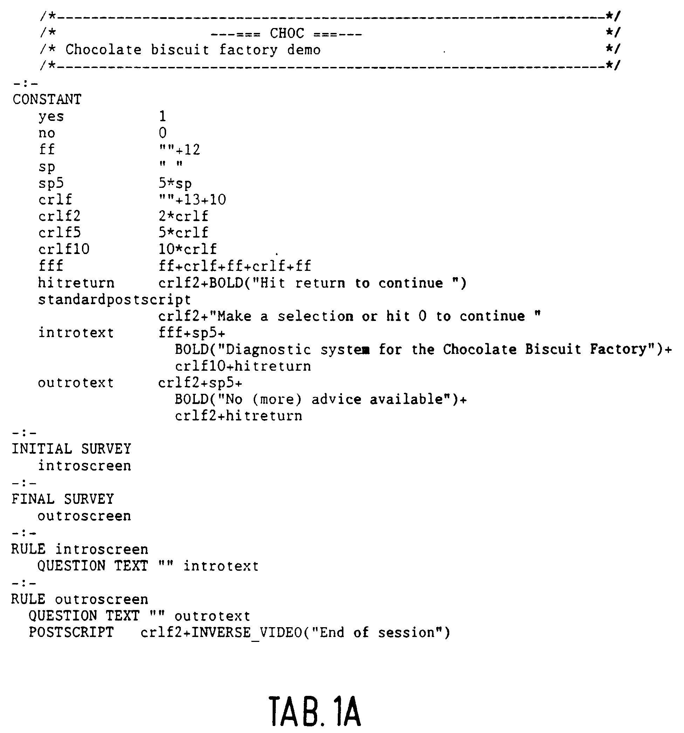

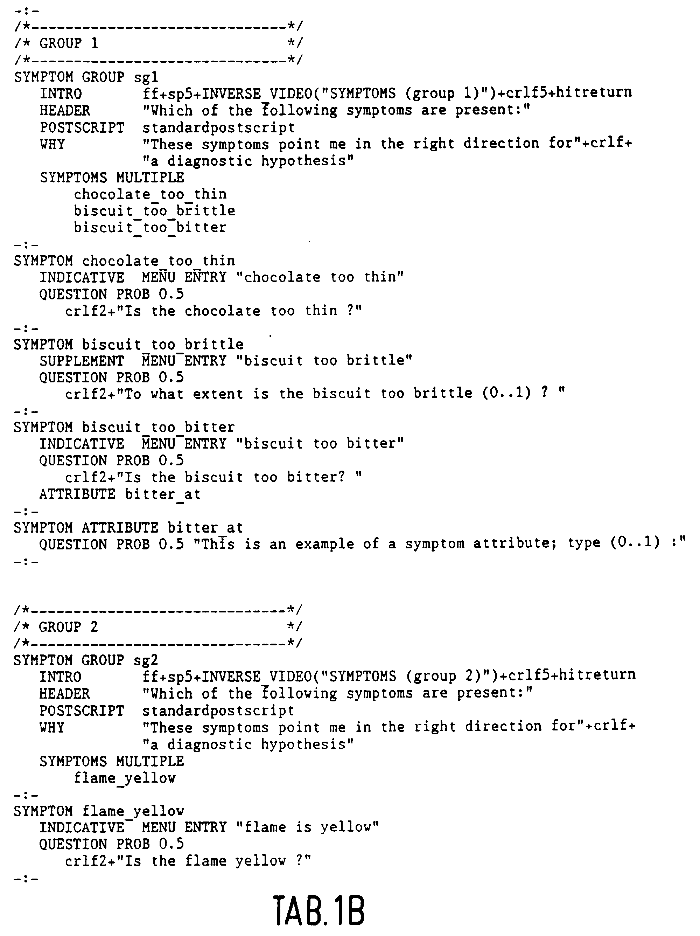

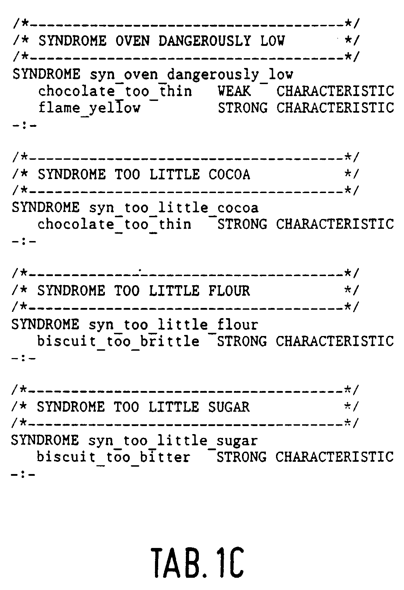

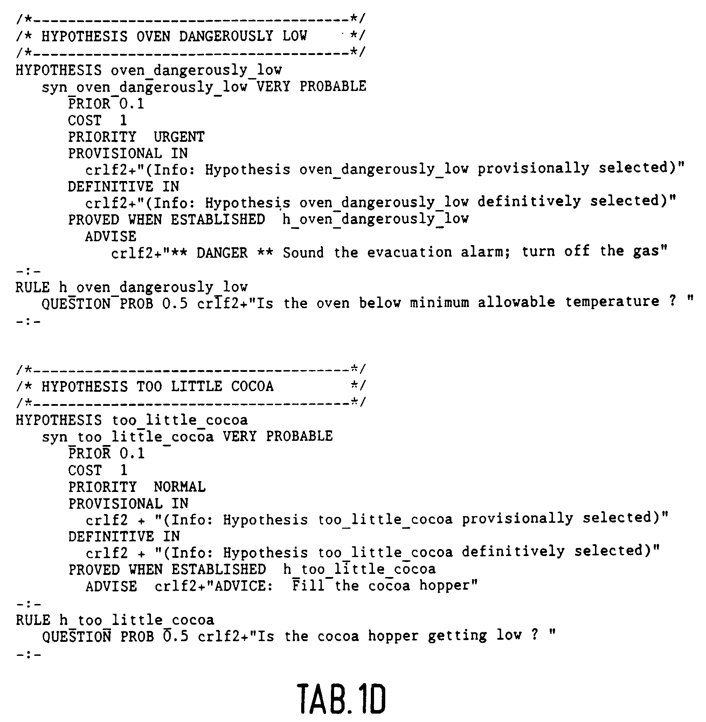

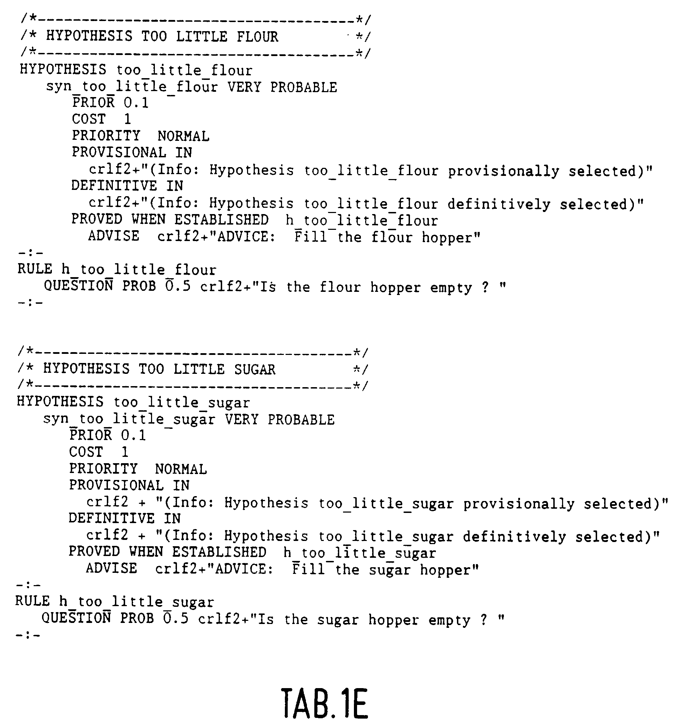

In this respect, Figure 3 is a block diagram of a simplified diagnostic model, giving exemplary links between symptoms, syndromes, hypotheses and hypothesis proof trees. The model in question relates to a malfunctioning Compact Disk optical record player. The symptom set (apart from the initial input "Some malfunction present") has symptoms 70A: does nothing (lamp dead); 70B: tray problem (mechanical entering of disk impossible); 70C: displays error (visible on front); 70D: stops playing (after a good start); 70E: inconsistent play (jumps across tracks, etcetera); 70F: distortion or interference (in audio representation). From one or more of such symptoms 70A..F, one or more syndromes can be drawn up. The syndrome set has syndromes 72A: device dead: (no or insufficient electric power); 72B: tray mechanical (position of tray stuck); 72C: tray electrical (motion possible but not effected); 72D: focus not found (laser/reading mirror combination cannot be positioned adequately); 72E: tracking problem (track not followed adequately); 72F: digital signal (not adequate). The set of syndromes 72A..F in turn lead to a set of hypotheses: 74A: PSU-failure (no internal power generated); 74B: tray askew (positioning wrong); 74C: tray out of mesh (rack and pinion drive ineffective); 74D: tray motor failure; 74E: bad focus potential (reference voltage wrong); 74F: laser weak; 74G: foil loose (kind of flat cable for transmitting signals); 74H: photodiode broken; 74I: arm askew. The sets of symptoms, syndromes and hypotheses, although representative, may to a smaller or larger extent be incomplete, also depending on the type (complexity) of the player. Furthermore, various hypotheses may be an aggregate of still more detailed error hypothesis. It should be noted that a human user would only see symptoms (and attributes, which have not been shown in Figure 3). The syndromes and hypothesis representations need not be observable, although they might be so, such as "tray askew" which at any rate is a macroscopic problem. Also the set of causal interconnections shown is relevant, but not restrictive. Now, the hypotheses can be strengthened or weakened by additional symptom evidence and are proved or disproved by going through one or more hypothesis proof trees 76. The linking of symptoms, syndromes and hypotheses on each level can be one to one (top row), one to many (second row), many to one, or composite. The linking of hypotheses to hypothesis proof trees generally is one to one. In particular cases, a hypothesis may be proven or disproven through two or more separate trees (which of course, may be amalgamated to showing as a single tree only).

Further in this respect, Figure 4 is a flow chart of a basic reasoning strategy which comprises the following phases after initialization (80):

### Phase 1

Execute the INITIAL SURVEY (82), such as entering the type number and/or manufacturing date of the physical object under consideration and any such information considered usefull but which does not fit in any other part of the flow chart.

### Phase 2

Solicit symptoms using a menu per group (84). This is done by presenting a menu containing each symptom in the group, so that the user can say something about a symptom by entering its number. A detailed question about that symptom can then be asked (optionally). The user can skip menus with option 0.If the answer to a symptom question gives rise to demons, (a standard term which indicates conditionally activatable actions), in particular SYMPTOM ATTRIBUTES pertaining to one or more particular symptoms,
* fire the demon (in particular ask the directed question then necessary) as soon as the demon's firing conditions are true;
* backward chain as necessary to acquire all the required information pertaining to a demon.
Any data acquired is immediately propagated by forward chaining. Apart from the firing of the demons, there is no backward chaining at this juncture with respect to the data. In particular, SYNDROME and HYPOTHESIS probabilities are incrementally (re-)evaluated. RULES and SYMPTOM ATTRIBUTES are also forward chained.

### Phase 2a

Propagate any relevant symptom and symptom attribute information first to appropriate syndromes and therethrough to one or more appropriate hypotheses, or, in a later stage improve the conjecture of those hypotheses (87).

### Phase 3

Examine whether there are any eligible hypotheses (86), which is effected with a computation as based on quantitative properties, such as à posteriori probability, cost of verification, and priority. Eligible hypotheses have a probability value above their default value. Amongst the latter ones, the selection of a preferential hypothesis takes place on the probability of that hypothesis accounting for the physical fault syndromes and symptom attributes information relevant to it, and the expected cost, usually in terms of the time required to verify the hypothesis in question.
if: there are no eligible hypotheses
then: go to Phase 7 (100)
else: proceed to phase 4 (88).

### Phase 4

On the basis of existing syndromes, select the best hypothesis (88). This selection depends on the probability that such hypothesis would come out to be true, the cost of (especially the required time for) effectively investigating the hypothesis, and the priority of the particular hypothesis over one or more other hypotheses.

### Phase 5 (90)

if: there are missing symptoms related to the selected hypothesis
then: ask these symptoms and symptom attributes whose firing condition becomes true (92) and thereafter revert to phase 2a (87). This may or may not involve selecting another hypothesis of the set of hypotheses. Again, the questioning for attributes may be in the form of demons. Thus, the system takes the initiative in backward chaining on the basis of a selected fault cause hypothesis for soliciting missing symptom or symptom attribute information.
else: proceed.

### Phase 6 (94)

Establish the validity of the hypothesis, which, again is done on the system's initiative by means of backward chaining (96)
if: the hypothesis is proven to be true
then: advise on a repair or other operational action and proceed (98)
else: set hypothesis probability zero (102) and return to phase 3.

### Phase 7

Execute the FINAL SURVEY (100), which may represent signalling defeat, making a statistical assessment of the result, or otherwise. Thereafter the procedure is terminated (104).

### DESCRIPTION OF AN OPERATIONAL EXAMPLE

In this respect, Tables 1A... exemplify a particular fault diagnosis method as applied to a very elementary representation of a biscuit factory. The logic programming language Prolog was chosen as the implementation vehicle. For an extensive description of this language, see W.F. Clocksen et al., Programming in Prolog, Springer Verlag, ISBN3-540-11046-1/0-387-11046-1. However, conversion to the Pascal language is an advantageous option, too. In the tables, this higher level language is transparent.

The scenario is a rudimentary chocolate biscuit factory, in which one possible syndrome is that the oven is dangerously low, which is a dangerous situation, so that the factory would have to be evacuated. There are two symptoms which suggest the oven syndrome; a "yellow flame" and "thin chocolate", the latter because the lower temperature inhibits the caramelising process which thickens the chocolate. However, the thin-chocolate symptom is usually simply caused by insufficient cocoa supply; it is certainly not advisable to panic as soon as this symptom is observed.

There is a one-to one-mapping between the symptom for chocolate-too-thin and the syndrome for chocolate-too-thin, and between the syndrome oven-dangerously-low and the hypothesis oven-dangerously-low. In a more extensive system these mappings could easily become one-to-many, or alternatively, many-to-one mappings.

The first SYNDROME statement (oven-dangerously-low) shows how the two symptoms are "connected" to the syndrome. The thin-chocolate symptom is weaker than the yellow-flame symptom and the strength settings are such that the definite absence of the yellow-flame will more than cancel out the effect of the definite presence of the thin-chocolate.

The second SYNDROME statement (chocolate too thin) corresponds uniquely to the similarly named observable symptom in this case.

The first HYPOTHESIS statement (oven dangerously low) can explain the dangerous-oven syndrome, which means that it can effectively account for the chocolate being too thin and/or the flame being yellow. The hypothesis has been marked URGENT as it covers a potentially dangerous situation in which the factory may have to be evacuated. The proof-tree is a simple question (it could have been a major tree structure). Note that this hypothesis has been marked urgent.

The second HYPOTHESIS statement (too little cocao) can explain only the too-little-cocoa syndrome, and so only account for the too-little-cocoa symptom. The hypothesis has NORMAL priority. The proof-tree is a again simple question.

Now let us consider what happens if the thin-chocolate symptom, and only this symptom, is entered. The system derives immediately the presence of the syndromes (oven-dangerously-low and chocolate-too-thin), and the hypotheses (oven-dangerously-low and too-little-cocoa). The hypothesis oven-dangerously-low, being urgent, is provisionally selected. There is a missing symptom to this hypothesis, the yellow flame. The symptom will be asked for. More often than not the answer will be "no" since the most common explanation for thin chocolate is not that the oven is dangerously low. If "no" is answered, the strength of this negative evidence makes the hypothesis so unlikely that it will not be considered. If however the user observes the yellow flame, or even says he does not know, the hypothesis will be activated and the proof tree will be investigated, resulting here in the single question about the oven temperature. Only if the user identifies the low temperature problem will the alarm advice be given. If the oven is all right after all, the system discards the hypothesis and looks for other hypotheses which can explain the chocolate-thin syndrome. It will see the too-little cocoa hypothesis, activate it and ask the question about the cocoa hopper. As this is the only remaining hypothesis, (and also the most likely explanation of thin chocolate) let us answer "yes" here and obtain the advice to fill the cocoa hopper, otherwise the system will gracefully admit defeat.

Similarly to the hypotheses -oven-dangerously low- and -too-little-cocoa-, the system has hypotheses -too-little-flour- and -too-little-sugar-, but the latter two are completely isolated from the former two, and do not interrelate.

Although this example only contains four interrelating basic items (thin-chocolate, yellow-flame, oven-dangerously-low and too-little-cocoa), the variation in the behaviour of the system is
* nontrivial
* exactly the behaviour you want
* unimplementable as a (non-redundant) tree structure
* enforced by the inference engine, only being implicit in the declarative style of knowledge representation.

Table 1A... exemplify explicitly the particular fault diagnosis method as relevant to the biscuit factory explained supra. In table 1A first under "CONSTANT" various assignments are executed. ff is a form feed or clear screen code, sp5 means five space positions, crlf means carriage return, line feed, fff means a triple form feed, hitreturn causes the displaying of the expression listed thereafter, the same applies to the three labels standard postscript, introtext, outrotext. Next, four partial procedures are listed which in this elementary case are selfexplanatory. The next table 1B first lists the first physical fault symptom group GROUP1 (there are three physical fault symptoms). Each of the physical fault symptoms may be prompted either alone or in combination. For one of the three, a fault symptom attribute may be added. The final part of the table gives the second (less often used) physical fault symptom (in a different menu). Table 1C has all four specified physical fault syndromes of which the first is weakly characterized by the first physical fault symptom but strongly characterized by the second physical syndrome. The second physical fault syndrome is strongly characterized by its only physical fault symptom. Third and fourth syndromes are self-explanatory. Table 1D,E list the four specified physical fault hypotheses. The first syndrome is by a low probability but urgent priority linked to the first hypothesis. For additional validation a rule-asking has been given, and also a mitigatory advice. The other three hypotheses are of corresponding structure and all have normal priority: they relate to the efficient provision of the necessary ingredients, all have a rule verification linked to the associated ingredient.

## Claims

1. A method for physical fault diagnosing of an object by a computer-based expert system, using a first set of physical fault symptoms each linked to at least one element of a second set of fault syndromes each linked to at least one element of a third set of fault cause hypotheses, by collecting (84) a non-empty subset of said first set and appropriate symptom attributes to any element collected, characterized by:
- propagating (87) from such collected physical fault symptoms that are basically complaints, and symptom attributes, that are facts associated with symptoms, through any appropriate link to a physical fault syndrome, that is a general sort of conclusion to be drawn from the symptoms and symptom attributes, of said second set and therefrom through any appropriate further link to a fault cause hypothesis, that is a theory which can account for symptoms and syndromes, of said third set, that were commensurate with at least one physical fault symptom selected;
- provisionally selecting (88) a preferential fault cause hypothesis among those so reached by said propagating;
- soliciting (92) any uncollected yet available physical fault symptom or symptom attribute information relevant to the provisionally selected preferential hypothesis;
- definitively selecting a definitive fault cause hypothesis which could account for at least a part of all physical fault symptoms and symptom attributes so collected whilst provisionally retaining any secondary fault cause hypothesis among those so reached and selectively verifying/refuting (94/96) said definitive fault cause hypothesis and in case of said definitive fault cause hypothesis being refuted, reverting to said provisionally selecting, soliciting and definitively selecting, until either any definitive fault cause hypothesis is verified for thereupon issuing (98) an operational advice for said collected physical fault symptoms, or alternatively, after repeating said steps of provisionally selecting, soliciting, and definitively selecting steps, all fault cause hypotheses that could account for said physical fault symptoms are exhausted.

2. A method as claimed in Claim 1, wherein said initial collecting of physical fault symptoms and associated symptom attribute information is exclusively based on menuing on a physical display unit, whereas after selecting any preferential fault cause hypothesis only physical fault symptoms linked to the latest selected preferential fault cause hypothesis are interrogated.

3. A method as claimed in Claim 1 or 2, wherein said propagating is exclusively in a forward direction under activation of information input external to the system, said selecting is effected thru procedural computation, whereas collecting said symptom attribute information, said solliciting and said verifying include moving in a backward direction under activation by the system, while thereupon allowing secondary forward propagating through said linking.

4. A method as claimed in Claim 1, 2 or 3, wherein the propagation of physical fault symptoms and symptom attribute information through physical fault syndromes to physical fault hypothesis is performed on the basis of Bayesian probability theory.

5. A method as claimed in any of Claims 1 to 4, wherein selection of a preferential hypothesis quantitatively prefers those hypotheses with a higher probability related to the verification thereof and quantitatively discriminates against those hypotheses with a higher expected verification cost.

6. A method as claimed in any of Claims 1 to 5, wherein items are categorized as -constants-; -physical fault symptoms-, grouped into -physical fault symptom groups-, -symptom attributes-, -physical fault syndromes-, -physical fault hypotheses-, and -rules-, and are directly represented by this domain-specific terminology for knowledge classes.

7. A method as claimed in Claim 6, wherein elements of said knowledge classes and their mutual linkage are elaborated as at least co-controlled by their prescribed properties being strong taking preponderance over those being weak, by their being characteristic taking preponderance over those being non-characteristic, by their being sufficient or necessary taking preponderance over those being ancillary or arbitrary, and by those having a low cost of validation taking preponderance over those having a high cost of validation.

8. A method as claimed in any of Claims 1 to 7, wherein any diagnostic reasoning strategy is implicit in an expert shell as being distinct from explicit in, or interwoven with any diagnostic knowledge items itself.

9. A method as claimed in any of Claims 1 to 8, comprising of selecting in addition to said preferential hypothesis, also a secondary or subsequent hypothesis, and by means of requesting any appropriate further physical fault symptom either affirming said preferential hypothesis in case of an affirming physical fault symptom or, alternatively, demoting in rank said preferential hypothesis in case of a deaffirming physical fault symptom, in disfavour or favour, respectively, of any said secondary or subsequent hypothesis, respectively, for allowing in the latter case said secondary or subsequent hypothesis to thereafter figure as definitive preferential hypothesis but in the former retaining the actual preferential as definitive preferential hypothesis.

10. A method as claimed in any of Claim 1 or 9, wherein at least one physical fault symptom is produced on the basis of at least one physical signal directly derived from said object.

11. A method as claimed in any of Claims 1 to 10, wherein said operational advice is any of a curing, cleaning, readjusting, object replacement, object removal, or repair recipe.

12. A method as claimed in Claim 9, wherein said preferential hypothesis is selected as at least co-based on a probability that such hypothesis comes out to be true.

13. A method as claimed in Claim 9, wherein said preferential hypothesis is selected as at least co-based on a cost of effectively investigating such hypothesis.

14. A method as claimed in Claim 9, wherein said preferential hypothesis is selected as at least co-based on a priority thereof over at least one other hypothesis.

## Patentansprüche

1. Verfahren zur Durchführung einer rechnergestützten Diagnose von physikalischen Fehlern eines Objektes mittels eines Expertensystems unter Verwendung einer ersten Gruppe von Symptomen physikalischer Fehler, die jeweils mit mindestens einem Element einer zweiten Gruppe von Fehlersyndromen verknüft sind, welche ihrerseites jeweils mit mindestens einem Element einer dritten Gruppe von Fehlerursache-Hypothesen verknüpft sind, indem eine nicht-leere Teilgruppe der genannten ersten Gruppe und geeignete Symptomattribute für jedes gesammelte Element zusammengetragen werden (84), gekennzeichnet durch:
- das Weiterleiten (87) von solchen zusammengetragenen Symptomen physikalischer Fehler, die im Grunde Beanstandungen sind, und Symptomattributen, die mit den Symptomen zusammenhängende Fakten sind, über eine geeignete Verknüpfung zu einem Syndrom physikalischer Fehler der genannten zweiten Gruppe, das eine allgemeine Art von aus den Symptomen und den Symptomattributen zu ziehende Schlußfolgerung ist, und von dort über eine geeignete weitere Verknüpfung zu einer Fehlerursachen-Hypothese der genannten dritten Gruppe, die eine Theorie ist, welche die Symptome und Syndrome erklären kann, die mindestens einem gewählten Symptom eines physikalischen Fehlers entsprechen;
- das provisorische Wählen (88) einer bevorzugten Fehlerursachen-Hypothese unter den auf diese Weise durch die genannte Weiterleitung erreichten Hypothesen;
- das Abrufen (92) aller nicht gesammelten, aber verfügbaren Informationen über Symptome eines physikalischen Fehlers oder über Symptomattribute, die für die provisorisch gewählte bevorzugte Hypothese relevant sind;
- das definitive Wählen einer definitiven Fehlerursachen-Hypothese, die mindestens einen Teil aller so zusammengetragenen Symptome physikalischer Fehler und Symptomattribute erklärt, wobei eine sekundäre Fehlerursachen-Hypothese unter den auf diese Weise erreichten provisorisch beibehalten wird und die genannte definitive Fehlerursachen-Hypothese selektiv verifiziert / widerlegt wird (94/96) und im Falle einer Widerlegung der genannten definitiven Fehlerursachen-Hypothese zum provisorischen Auswählen einer Hypothese, zum Abrufen von Informationen und zum definitivem Auswählen einer Hypothese zurückgekehrt wird, bis entweder eine definitive Fehlerursachen-Hypothese verifiziert ist, um daraufhin einen operationellen Ratschlag für die genannten zusammengetragenen Symptome physikalischer Fehler auszugeben (98), oder alternativ bis nach der Wiederholung der genannten Schritte des provisorischen Auswählens einer Hypothese, des Abrufens von Informationen und des definitiven Auswählens einer Hypothese alle Fehlerursachen-Hypothesen, die die genannten Symptome physikalischer Fehler erklären könnten, erschöpft sind.

2. Verfahren nach Anspruch 1, wobei das genannte anfängliche Zusammentragen der Symptome physikalischer Fehler und der Informationen über zugehörige Symptomattribute ausschließlich auf dem Auswählen von Menü-Optionen auf einer physikalischen Anzeigeeinheit basiert, während nach der Wahl einer bevorzugten Fehlerursachen-Hypothese nur Symptome physikalischer Fehler, die mit der zuletzt gewählten bevorzugten Fehlerursachen-Hypothese verknüpft sind, abgefragt werden.

3. Verfahren nach Anspruch 1 oder 2, wobei die genannte Weiterleitung ausschließlich in einer Vorwärtsrichtung unter Aktivierung von systemexterner Informationseingabe erfolgt, wobei die genannte Auswahl durch prozedurmäßige Berechnung erfolgt, während das Zusammentragen der genannten Symptomattribut-Informationen, das genannte Abrufen von Informationen und das genannte Verifizieren die Bewegung in Rückwärtsrichtung unter Aktivierung durch das System umfassen, und daraufhin eine sekundäre Vorwärts-Weiterleitung durch die genannte Verknüpfung ermöglicht wird.

4. Verfahren nach Anspruch 1, 2 oder 3, wobei die Weiterleitung der Symptome physikalischer Fehler und der Symptomattribut-Informationen über Syndrome physikalischer Fehler zur Fehlerursachen-Hypothese auf der Grundlage der Bayesschen Wahrscheinlichkeitstheorie erfolgt.

5. Verfahren nach einem der Ansprüche 1 bis 4, wobei bei der Auswahl einer bevorzugten Hypothese quantitativ diejenigen Hypothesen mit einer höheren Wahrscheinlichkeit in bezug auf ihre Verifizierung bevorzugt werden und diejenigen Hypothesen mit einem höheren erwarteten Verifizierungsaufwand quantitativ diskriminiert werden.

6. Verfahren nach einem der Ansprüche 1 bis 5, wobei Posten klassifiziert werden als "Konstanten", "Symptome physikalischer Fehler", gruppiert in "Gruppen von Symptomen physikalischer Fehler", "Symptomattribute", "Syndrome physikalischer Fehler", "Hypothesen für physikalische Fehler" und "Regeln", und durch diese gebietsspezifische Terminologie für Wissensklassen direkt dargestellt werden.

7. Verfahren nach Anspruch 6, wobei Elemente der genannten Wissensklassen und ihre wechselseitige Verknüpfung ausgearbeitet werden als zumindest mitgesteuert durch die Vorherrschaft ihrer starken vorgeschriebenen Eigenschaften gegenüber den schwächeren Eigenschaften, durch die Vorherrschaft derjenigen mit charakteristischen Eigenarten gegenüber den nicht-charakteristischen, durch die Vorherrschaft derjenigen mit ausreichenden oder erforderlichen Eigenschaften gegenüber denjenigen mit untergeordneten oder willkürlichen Eigenschaften, und durch die Vorherrschaft derjenigen mit geringen Validierungskosten über diejenigen mit hohen Validierungskosten.

8. Verfahren nach einem der Ansprüche 1 bis 7, wobei jede diagnostische Beweisführungsstrategie implizit in einer Experten-Benutzeroberfläche enthalten ist und nicht explizit darin ist oder mit den diagnostischen Wissensposten selbst verwoben ist.

9. Verfahren nach einem der Ansprüche 1 bis 8, das zusätzlich zu der genannten bevorzugten Hypothese auch eine sekundäre oder nachfolgende Hypothese umfaßt, wobei durch Anfordern eines geeigneten weiteren Symptoms eines physikalischen Fehlers die genannte bevorzugte Hypothese im Falle eines bestätigenden Symptoms eines physikalischen Fehlers bestätigt wird oder alternativ die genannte bevorzugte Hypothese im Falle eines nicht-bestätigenden Symptoms eines physikalischen Fehlers degradiert wird, und zwar zugunsten beziehungsweise zuungusten jeder genannten sekundären oder nachfolgenden Hypothese, um in letzten Fall zu ermöglichen, daß die genannte sekundäre oder nachfolgende Hypothese im folgenden als definitive bevorzugte Hypothese fungiert, aber im ersten Fall die eigentliche bevorzugte Hypothese als definitive bevorzugte Hypothese beibehalten wird.

10. Verfahren nach einem der Ansprüche 1 bis 9, wobei mindestens ein Symptom eines physikalischen Fehlers auf der Basis von mindestens einem Signal erzeugt wird, das direkt von dem genannten Objekt abgeleitet wurde.

11. Verfahren nach einem der Ansprüche 1 bis 10, wobei sich der genannte operationelle Ratschlag auf die Behebung des Fehlers, Reinigung, Justierung, Objektaustausch, Objektausbau oder auf eine Reparaturanweisung bezieht.

12. Verfahren nach Anspruch 9, wobei die Auswahl der genannten bevorzugten Hypothese zumindest auch von der Wahrscheinlichkeit abhängt, daß sich eine solche Hypothese bewahrheiten wird.

13. Verfahren nach Anspruch 9, wobei die Auswahl der genannten bevorzugten Hypothese zumindest auch von den Kosten für die effiziente Untersuchung einer solchen Hypothese abhängt.

14. Verfahren nach Anspruch 9, wobei die Auswahl der genannten bevorzugten Hypothese zumindest auch von der Priorität dieser Hypothese im Vergleich zu mindestens einer anderen Hypothesen abhängt.

## Revendications

1. Procédé pour diagnostiquer les défauts physiques d'un objet par un système expert informatisé, utilisant un premier ensemble de symptômes de défaut physique liés chacun à au moins un élément d'un deuxième ensemble de syndromes de défaut liés chacun à au moins un élément d'un troisième ensemble d'hypothèses de cause de défaut, en collectant (84) un sous-ensemble non vide dudit premier ensemble et des attributs de symptôme appropriés pour tout élément collecté, caractérisé par :
- la propagation (87) de tels symptômes de défaut physique collectés qui sont essentiellement des plaintes, et d'attributs de symptôme qui sont des faits associés aux symptômes, via n'importe quelle liaison appropriée à un syndrome de défaut physique, qui est une sorte de conclusion générale à tirer des symptômes et attributs de symptôme, dudit deuxième ensemble et de là, via n'importe quelle autre liaison appropriée, à une hypothèse de cause de défaut, qui est une théorie qui peut expliquer les symptômes et syndromes, dudit troisième ensemble, qui étaient fonction d'au moins un symptôme de défaut physique sélectionné;
- la sélection provisoire (88) d'une hypothèse de cause de défaut préférentielle parmi les hypothèses ainsi atteintes par ladite propagation;
- la sollicitation (92) de n'importe quelle information de symptôme ou d'attribut de symptôme de défaut physique déjà disponible non collectée intéressante pour l'hypothèse préférentielle sélectionnée de manière provisoire;
- la sélection définitive d'une hypothèse de cause de défaut définitive qui pourrait expliquer au moins une partie de tous les symptômes et attributs de symptôme de défaut physique ainsi collectés tout en retenant provisoirement toute hypothèse de cause de défaut secondaire parmi les hypothèses ainsi atteintes et la vérification/réfutation sélective (94/96) de ladite hypothèse de cause de défaut définitive et en cas de réfutation de ladite hypothèse de cause de défaut définitive, retour à ladite sélection provisoire, sollicitation et sélection définitive, jusqu'à ce qu'une hypothèse de cause de défaut définitive soit vérifiée pour émettre (98) ensuite un conseil opérationnel pour lesdits symptômes de défaut physique collectés, ou en variante, qu'après répétition desdites étapes de sélection provisoire, sollicitation et sélection définitive, toutes les hypothèses de cause de défaut qui pourraient expliquer lesdits symptômes de défaut physique soient épuisées.

2. Procédé suivant la revendication 1, dans lequel ladite collecte initiale de symptômes de défaut physique et d'informations d'attribut de symptôme associées est exclusivement basée sur une sélection dans un menu sur une unité d'affichage physique, alors qu'après la sélection de toute hypothèse de cause de défaut préférentielle, seuls les symptômes de défaut physique liés à la dernière hypothèse de cause de défaut préférentielle sélectionnée sont interrogés.

3. Procédé suivant la revendication 1 ou 2, dans lequel ladite propagation se fait exclusivement vers l'avant sous l'activation d'une entrée d'informations externe au système, ladite sélection est effectuée par un calcul procédural, alors que la collecte de ladite information d'attribut de symptôme, ladite sollicitation et ladite vérification comprennent des mouvements vers l'arrière sous une activation par le système, tout en permettant ensuite une propagation secondaire vers l'avant via lesdites liaisons.

4. Procédé suivant la revendication 1, 2 ou 3, dans lequel la propagation de symptômes de défaut physique et d'information d'attribut de symptôme via des syndromes de défaut physique à une hypothèse de défaut physique est exécutée sur la base de la théorie de probabilité Bayésienne.

5. Procédé suivant l'une quelconque des revendications 1 à 4, dans lequel la sélection d'une hypothèse préférentielle préfère quantitativement les hypothèses offrant une probabilité supérieure en relation avec leur vérification et discrimine quantitativement les hypothèses présentant un coût de vérification escompté plus élevé.

6. Procédé suivant l'une quelconque des revendications 1 à 5, dans lequel les articles sont catégorisés en -constantes-; -symptômes de défaut physique-, groupés en -groupes de symptômes de défaut physique-, -attributs de symptôme-, -syndromes de défaut physique-, -hypothèses de défaut physique-, et -règles-, et sont représentés directement par cette terminologie spécifique au domaine pour des classes de connaissance.

7. Procédé suivant la revendication 6, dans lequel l'élaboration des éléments desdites classes de connaissance et de leur liaison mutuelle est contrôlée au moins à la fois par leurs propriétés prescrites majeures prépondérantes sur leurs propriétés mineures, par leurs propriétés caractéristiques prépondérantes sur leurs propriétés non caractéristiques, par leurs propriétés suffisantes ou nécessaires prépondérantes sur leurs propriétés auxiliaires ou arbitraires, et par leurs propriétés présentant un faible coût de validation prépondérantes sur leurs propriétés présentant un coût élevé de validation.

8. Procédé suivant l'une quelconque des revendications 1 à 7, dans lequel toute stratégie de raisonnement de diagnostic est implicite dans une coquille d'expert et non pas explicite, ou entremêlée avec tout article de connaissance de diagnostic lui-même.

9. Procédé suivant l'une quelconque des revendications 1 à 8, comprenant la sélection en plus de ladite hypothèse préférentielle, également d'une hypothèse secondaire ou ultérieure, et au moyen d'une requête de tout symptôme de défaut physique supplémentaire approprié, soit la confirmation de ladite hypothèse préférentielle dans le cas d'un symptôme de défaut physique confirmé, soit en variante, la descente d'une classe de ladite hypothèse préférentielle dans le cas d'un symptôme de défaut physique non confirmé, en défaveur ou en faveur, respectivement, de toute hypothèse secondaire ou ultérieure, respectivement, pour permettre dans ce dernier cas à ladite hypothèse secondaire ou ultérieure de figurer ci-après en tant qu'hypothèse, préférentielle définitive, mais dans le premier cas, pour retenir l'hypothèse préférentielle actuelle comme hypothèse préférentielle définitive.

10. Procédé suivant l'une quelconque des revendications 1 à 9, dans lequel au moins un symptôme de défaut physique est produit sur la base d'au moins un signal physique directement dérivé dudit objet.

11. Procédé suivant l'une quelconque des revendications 1 à 10, dans lequel lesdits conseils opératoires sont une recette de cuisson, de nettoyage, de réajustement, de remplacement d'objet, d'enlèvement d'objet, ou de réparation.

12. Procédé suivant la revendication 9, dans lequel ladite hypothèse préférentielle est sélectionnée comme étant au moins cobasée sur une probabilité que cette hypothèse deviendra vraie.

13. Procédé suivant la revendication 9, dans lequel ladite hypothèse préférentielle est sélectionnée comme étant au moins cobasée sur un coût d'examen effectif de cette hypothèse.

14. Procédé suivant la revendication 9, dans lequel ladite hypothèse préférentielle est sélectionnée comme étant au moins cobasée sur une priorité de cette hypothèse sur au moins une autre hypothèse.
